# EUROPEAN PATENT APPLICATION

(11) **EP 3 208 438 A1**
(43) Date of publication of application: **23.08.2017**
(21) Application number: 17156197.0
(22) Date of filing: 15.02.2017
(51) Int. Cl.: F01N 3/20, F01N 3/027

(54) **SCR AFTER-TREATMENT OF ENGINE EXHAUST GAS**

(30) Priority: 17.02.2016 US 201662296302 P; 20.10.2016 US 201615298438
(71) Applicant: International Engine Intellectual Property Company, LLC, Lisle, Illinois 60532 (US)
(72) Inventor: Singh, Navtej, Arlington Heights, IL Illinois 60004 (US); Gosbee, Darren William, Maple Park, IL Illinois 60151 (US); Adelman, Bradley J., Chicago, IL Illinois 60654 (US)
(74) Representative: Kuhnen & Wacker

(57) **Abstract**

Reductant is metered into an engine exhaust gas after-treatment system upstream of an SCR catalyst at engine exhaust gas temperatures both less than and greater than a DEF dosing threshold temperature to render the catalyst effective in reducing NOx without creating undesired reaction products which would impair effectiveness of the after-treatment system at engine exhaust gas temperatures less than the DEF dosing threshold temperature.

## Description

### Technical Field

This patent application claims priority from US Provisional Patent Application Serial No. 62/296,302 filed on 02.17.2016. That application is incorporated herein in its entirety by this reference.

The present disclosure relates to after-treatment of exhaust gas created by combustion of hydrocarbon fuel in an internal combustion engine, especially to catalytic reduction of oxides of nitrogen (NOx) in engine exhaust gas by selective catalytic reduction.

### Background

Selective catalytic reduction (SCR) is a known technology for reducing NOx in engine exhaust gas. Currently manufactured vehicles which are propelled by internal combustion engines, such as diesel engines, and which use SCR as part of an exhaust after-treatment strategy, carry an on-board supply of diesel exhaust fluid (DEF) from which DEF is metered in controlled quantity into the engine exhaust system upstream of an SCR catalyst. DEF is a standardized aqueous urea solution which comprises 32.5% urea and 67.5% de-ionized water. The chemistry of SCR after-treatment of engine exhaust gas using DEF is well-documented. When DEF is introduced into engine exhaust gas of sufficiently high temperature, the water evaporates and the urea decomposes to create ammonia. Ongoing reactions in the presence of the catalyst reduce NOx into nitrogen, carbon dioxide, and water.

### Summary of the Disclosure

Certain motor vehicles may at times be operated in ways which make the use of DEF for SCR after-treatment of engine exhaust gas undesirable. When SCR after-treatment is not used, NOx in exhaust gas remains largely untreated and consequently passes out of the tailpipe and into the surrounding atmosphere.

One example of how this can occur is during operation of an engine after a cold-start while exhaust gas temperature remains below a DEF dosing threshold which sets a minimum temperature requirement for introducing DEF into the after-treatment system. Requiring exhaust gas temperature to reach dosing threshold temperature before allowing introduction of DEF into the after-treatment system avoids incomplete hydrolysis of urea in DEF. Incomplete hydrolysis of urea creates reaction products other than nitrogen, carbon dioxide, and water, products which will damage the after-treatment system. Clogging of after-treatment systems by such reaction products is a known example of what can happen by repeated cold-start operation of a motor vehicle over a fairly short period of time.

The present disclosure relates to solutions for enabling effective SCR after-treatment of engine exhaust gas during cold-start operation of a motor vehicle so that NOx can be treated significantly earlier during cold-start operation than at the present time in motor vehicles which use DEF for selective catalytic reduction of NOx.

A general aspect of the present disclosure relates to an internal combustion engine comprising an engine exhaust gas after-treatment system comprising a catalyst for reducing NOx in engine exhaust gas by selective catalytic reduction, a supply of reductant, and a controller for metering reductant into the after-treatment system upstream of the catalyst at engine exhaust gas temperatures both less than and greater than a DEF dosing threshold temperature to render the catalyst effective in reducing NOx without creating a reaction product which would impair effectiveness of the after-treatment system by depositing and collecting on components of the after-treatment system at engine exhaust temperatures less than the DEF dosing threshold temperature.

Another general aspect relates to a method for reducing NOx in engine exhaust gas flow through an engine exhaust after-treatment system by selective catalytic reduction.

The method comprises metering reductant into the after-treatment system upstream of a catalyst at engine exhaust gas temperatures both less than and greater than a DEF dosing threshold temperature to render the catalyst effective in reducing NOx at engine exhaust gas temperatures less than and greater than the DEF dosing threshold temperature without creating a reaction product which would impair effectiveness of the after-treatment system by depositing and collecting on components of the after-treatment system at engine exhaust temperatures less than the DEF dosing threshold temperature.

The foregoing summary is accompanied by further detail of the disclosure presented in the Detailed Description below with reference to the following drawings which are part of the disclosure.

### Brief Description of the Drawings

Fig. 1 is a schematic diagram of a first embodiment of exhaust gas after-treatment system of an internal combustion engine in a motor vehicle.
Fig. 2 is a graph plot useful in explaining operation of the after-treatment system.
Fig. 3 is a schematic diagram of a second embodiment of exhaust gas after-treatment system of an internal combustion engine in a motor vehicle.
Fig. 4 is an exploded perspective view of a portion of Fig. 3.
Fig. 5 a schematic diagram of a third embodiment of exhaust gas after-treatment system of an internal combustion engine in a motor vehicle.

### Detailed Description

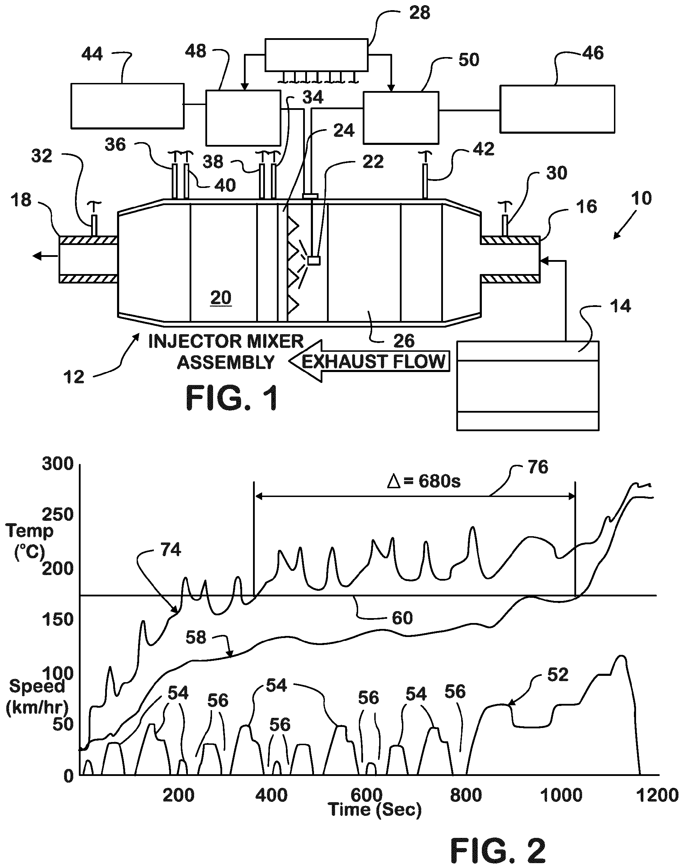

Fig. 1 schematically illustrates an internal combustion engine 10 having a first embodiment of an engine exhaust gas after-treatment system 12. Engine 10 is representative of a diesel engine which propels a motor vehicle such as a commercial vocational vehicle like a bus or delivery truck.

Engine exhaust gas coming from an engine exhaust manifold 14 enters after-treatment system 12 at an inlet 16 of an exhaust gas flow path through after-treatment system 12 and flows along the flow path to exit at an outlet 18 which leads to a tailpipe (not shown). During passage along the flow path, engine exhaust gas passes through one or more treatment elements one of which is a catalyst 20 which reduces NOx in engine exhaust gas by selective catalytic reduction (SCR). Reductant which chemically reduces NOx in the presence of catalyst 20 is introduced into the exhaust gas flow path through an injector 22 located upstream of catalyst 20. Injector 22 is part of an injector/mixer assembly which also comprises a mixer 24 downstream of injector 22 for promoting mixing of reductant with exhaust gas for proper distribution before the mixture passes along surfaces of catalyst 20.

Other exhaust gas treatment elements which after-treatment system 12 may contain include one or both of a diesel oxidation catalyst (DOC) and a diesel particulate filter (DPF) which are indicated by reference numeral 26 in Fig. 1 as being only a DOC, only a DPF, or both a DPF and a DOC.

A controller 28 controls the introduction of reductant into the exhaust gas flow path as a function of various exhaust gas parameters, such as NOx, temperature, and pressure, for the purpose of controlling NOx concentration in exhaust gas coming out of outlet 18. The parameters are measured by various sensors at various locations in after-treatment system 12. NOx sensors 30, 32 are located proximate inlet 16 and outlet 18 respectively. Temperature sensors 34, 36 are located before and after catalyst 20, as are pressure sensors 38, 40. A temperature sensor 42 is located proximate inlet 16.

Reductant for after-treatment system 12 is supplied from an ammonia storage tank 44 and a diesel exhaust fluid (DEF) storage tank 46 which are on-board a motor vehicle when engine 10 is one which is used to propel the motor vehicle. Each reductant is delivered from the respective storage tank in after-treatment system 12 through a respective metering valve 48, 50 which is controlled by controller 28 to meter a controlled quantity of reductant to injector 22. Use of each reductant is dependent on exhaust gas temperature, and the quantity of reductant metered is dependent on NOx concentration in exhaust gas. Ammonia can be stored in known ways within storage tank 44 and released as a gas which is injected by injector 22. DEF is stored within storage tank 46 as a urea solution, such as the one mentioned earlier.

As explained earlier, when exhaust gas temperature is less than the DEF dosing threshold temperature, such as while the engine warms after a cold-start, DEF is not used as reductant because its reaction with insufficiently warm exhaust gas creates reaction products which can deposit within the after-treatment system and accumulate to the point of clogging the system. In other words, the urea does not completely hydrolyze. Not treating exhaust gas for NOx during cold-start operation of engine 10 results in "engine out" exhaust gas leaving exhaust manifold 14 passing through after-treatment system 12 and entering the surrounding environment through outlet 16.

By metering of ammonia from on-board ammonia storage tank 44 to injector 22, exhaust gas can be treated for NOx when exhaust gas temperature is less than the DEF dosing threshold temperature. Once exhaust gas temperature becomes greater than the DEF dosing threshold temperature, use of ammonia is discontinued, and DEF from storage tank 46 is metered by DEF metering valve 50 without creating the undesired products which lead to clogging. In this way, controller 28 meters reductant into after-treatment system 12 at engine exhaust gas temperatures both less than and greater than the DEF dosing threshold temperature to render catalyst 20 effective in reducing NOx without creating a reaction product which would impair effectiveness of after-treatment system 12 by depositing and collecting on components of the after-treatment system at exhaust gas temperatures less than the DEF dosing threshold temperature.

Fig. 2 shows an example of cold-start operation of an engine in a vocational vehicle. When the vehicle is operated with frequent starting and stopping, the engine takes a longer time to warm to normal operating temperature than when operated without any stopping. A trace 52 at the bottom of Fig. 2 represents vehicle speed as a function of time. Trace 52 comprises a sequence of peaks 54 and valleys 56, with valleys 56 representing the vehicle being stopped with the engine being either left running or turned off. A trace 58 represents exhaust gas temperature. A horizontal line 60 represents the DEF dosing threshold temperature. Trace 58 and line 60 show that DEF should not be dosed for about 1000 seconds after engine cold-start in this example.

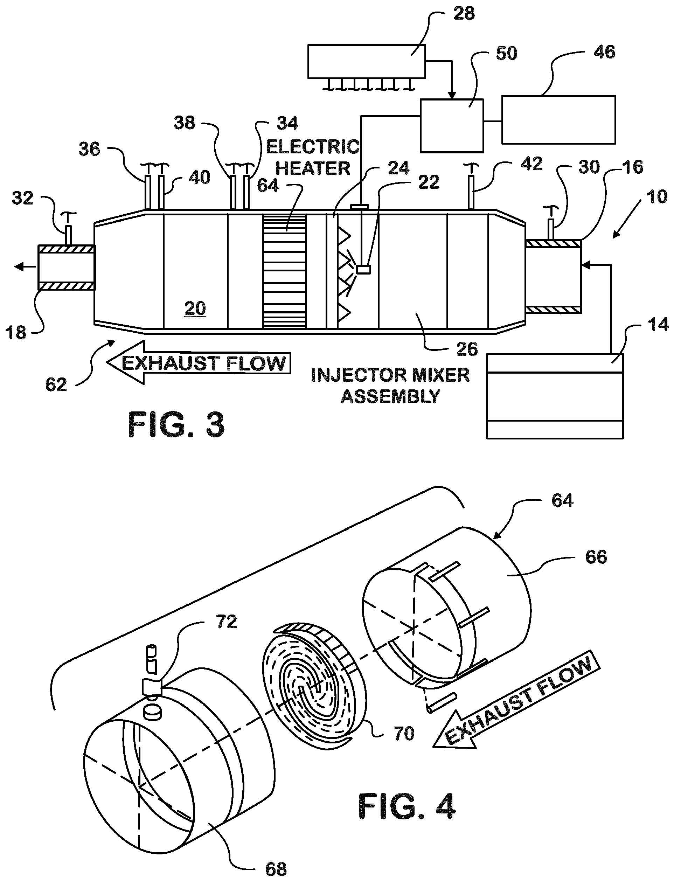

Fig. 3 schematically illustrates internal combustion engine 10 having a second embodiment of an engine exhaust gas after-treatment system 62. Components in Fig. 3 which are common to those already described in Fig. 1 are identified by the same reference numerals in both Figs. After-treatment system 62 differs from after-treatment system 12 in that ammonia storage tank 44 and ammonia metering valve 46 are omitted and in that downstream of injector 22 an electric heater 64 is added in the exhaust gas flow path at a location between mixer 24 and catalyst 20 so as to be located upstream of catalyst 20 and downstream of injector 22.

Detail of heater 64 is shown in Fig. 4. In a functional embodiment, heater 64 may have its own housing comprising an inner mantle 66 and an outer mantle 68, rather than being placed as schematically portrayed in Fig. 3. An electric heating element 70 is supported within the heater housing when mantles 66, 68 are fit together. A mixture of exhaust gas and DEF from mixer 24 enters the heater housing through an entrance and leaves housing through an exit to catalyst 20. An example of a commercial electric heater is one sold by Continental Emitec GmbH under the trademark EMICAT®.

Operation of electric heater 64 is controlled by controller 28 through a relay (not shown) which is external to the heater housing. Electric conductors from the relay pass into the heater housing through a fitting 72 to connect with heating element 70.

Heater 64 functions to heat engine exhaust gas passing through after-treatment system 62 so that exhaust gas flow reaches DEF dosing threshold temperature 60 significantly more quickly than if temperature of exhaust gas entering inlet 16 of after-treatment system 62 is the only temperature used to determine when DEF injection can start. This is graphically demonstrated in Fig. 2 by a trace 74 showing that DEF dosing threshold 60 is reached 680 seconds earlier in this example.

Heating element 70 comprises a surface across which engine exhaust gas flows and which optionally contains a catalytic coating for reducing NOx in engine exhaust gas by selective catalytic reduction. The surface of the heating element which contains the catalytic coating has a surface area which is less than a surface area of catalyst 20 across which engine exhaust gas flows after having flowed through heater 64. Because the surface area of the catalytic coating of the heater is less than the surface area of catalyst 20, the heater can be used to provide additional NOx reduction without increasing the surface area of catalyst 20.

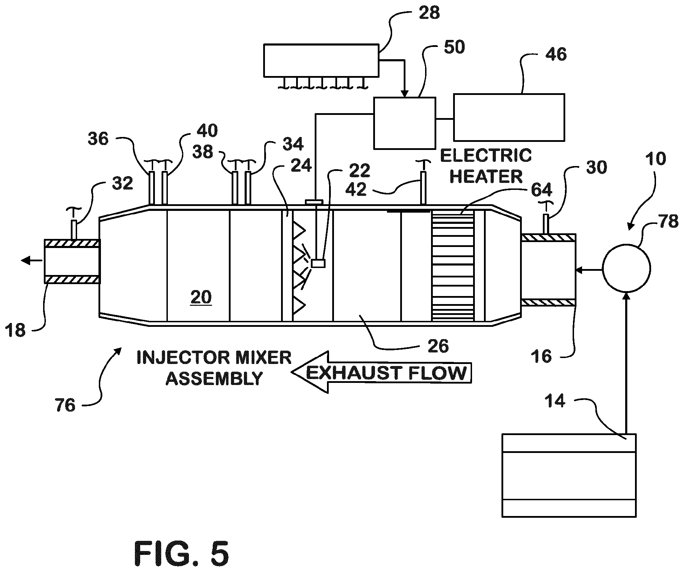

Fig. 5 schematically illustrates internal combustion engine 10 having a third embodiment of an engine exhaust gas after-treatment system 76. Components in Fig. 5 which are common to those already described in Figs. 1 and 3 are identified by the same reference numerals in both Figs. After-treatment system 76 differs from after-treatment system 76 only in that electric heater 64 is relocated to be ahead of the element or elements represented by reference numeral 26.

This placement of heater 64 allows exhaust gas flow past element or elements 26 to more quickly heat it or them, and that consideration may be useful in some after-treatment strategies even through it means that catalyst 20 is not heated as quickly. Fig. 5 also shows exhaust gas coming directly from an outlet of a turbocharger 78 in a turbocharged version of engine 10.

Fig. 2 shows DEF dosing temperature (line 60) as a constant temperature within the range between 150° C. and 200° C. The location of line 60 is intended to be representative of a temperature or a range of temperatures which demarcate a higher temperature region where complete hydrolysis of urea will occur from a lower temperature region where complete hydrolysis of urea is problematic. It is believed at this time that a temperature range which is between 190° C. and 200° C. can provide proper demarcation.

## Claims

1. A method for reducing NOx in engine exhaust gas flow through an engine exhaust gas after-treatment system by selective catalytic reduction, the method comprising:
metering reductant into the after-treatment system upstream of a catalyst at engine exhaust gas temperatures both less than and greater than a threshold temperature to render the catalyst effective in reducing NOx at engine exhaust gas temperatures less than and greater than a DEF dosing threshold temperature without creating a reaction product which would impair effectiveness of the after-treatment system by depositing and collecting on components of the after-treatment system at engine exhaust gas temperatures less than the DEF dosing threshold temperature.

2. The method as set forth in Claim 1 in which metering reductant into the after-treatment system upstream of a catalyst comprises metering diesel exhaust fluid (DEF) into engine exhaust gas flow through the after-treatment system and operating an electric heater upstream of the catalyst to heat engine exhaust gas when engine exhaust gas has a temperature less than the DEF dosing threshold temperature.

3. The method as set forth in Claim 2 in which metering DEF into the after-treatment system comprises introducing DEF into engine exhaust gas flow through the after-treatment system at a location upstream of the heater.

4. The method as set forth in Claim 3 including reducing NOx in engine exhaust gas by selective catalytic reduction by flow of engine exhaust gas across a surface of the heater which contains a catalyst coating for reducing NOx in engine exhaust gas by selective catalytic reduction.

5. The method as set forth in Claim 4 including reducing NOx in engine exhaust gas by selective catalytic reduction by flow of engine exhaust gas across a surface of the heater which contains a catalyst coating for reducing NOx in engine exhaust gas by selective catalytic reduction and which has a surface area which is less than a surface area of the catalyst across which engine exhaust gas flows after having flowed past the heater.

6. The method as set forth in Claim 2 further comprising introducing DEF into engine exhaust gas flow through the after-treatment system at a location downstream of the heater.

7. The method as set forth in Claim 1 in which metering reductant into the after-treatment system upstream of a catalyst at engine exhaust gas temperatures both less than and greater than the DEF dosing threshold temperature comprises metering ammonia from an ammonia supply and not DEF from a DEF supply into the after-treatment system at engine exhaust gas temperatures less than the DEF dosing threshold temperature and metering DEF from the DEF supply and not ammonia from the ammonia supply into the after-treatment system at engine exhaust gas temperatures greater than the DEF dosing threshold temperature.

8. The method as set forth in Claim 7 comprising controlling an ammonia metering valve to meter ammonia into the after-treatment system at engine exhaust gas temperatures less than the DEF dosing threshold temperature and controlling a DEF metering valve to meter DEF into the after-treatment system at engine exhaust gas temperatures greater than the DEF dosing threshold temperature.
